Europäisches Patentamt

European Patent Office

Office européen des brevets

(19)

(11) Numéro de publication: **0 248 745 B1**

(12) **FASCICULE DE BREVET EUROPEEN**

(45) Date de publication du fascicule du brevet:
**04.04.90**

(51) Int. Cl.⁴: **C01B 33/32, C11D 3/08**

(21) Numéro de dépôt: **87420136.1**

(22) Date de dépôt: **20.05.87**

(54) **Cogranules silicate - silice, procédé d'obtention et utilisation dans les compositions détergentes.**

(30) Priorité: **27.05.86 FR 8607764**

(43) Date de publication de la demande:
**09.12.87 Bulletin 87/50**

(45) Mention de la délivrance du brevet:
**04.04.90 Bulletin 90/14**

(84) Etats contractants désignés:
**AT BE CH DE ES FR GB GR IT LI LU NL SE**

(56) Documents cités:
**FR-A- 2 380 986**
**US-A- 3 051 550**
**US-A- 3 687 640**

(73) Titulaire: **RHONE-POULENC CHIMIE, 25, quai Paul Doumer, F-92408 Courbevoie Cédex(FR)**

(72) Inventeur: **Joubert, Daniel, Route du Stade Reyrieux, F-01600 Trevoux(FR)**
Inventeur: **Parker, Philippe, 25 rue de la Doua, F-69100 Villeurbanne(FR)**

(74) Mandataire: **Le Pennec, Magali et al, RHONE-POULENC INTERSERVICES Service Brevets Chimie 25, Quai Paul Doumer, F-92408 Courbevoie Cédex(FR)**

## Description

La présente invention concerne de nouveaux granulés constitués de silicate et de silice, leur procédé d'obtention ainsi que leur utilisation en détergence et plus particulièrement leur utilisation dans les compositions détergentes pour lave vaisselle.

Les silicates et notamment le métasilicate sont des produits d'usage courant dans les compositions détergentes pour lave vaisselle, en effet ils apportent l'alcalinité nécessaire pourle lavage des ustensiles culinaires souillés. Cette alcalinité nécessaire pour un effet détergent pose en contrepartie des problèmes de sécurité. En effet les poudres détergentes pour lave vaisselle sont d'un usage domestique courant et sont souvent à la portée des enfants qu n'en connaissant pas le danger et ont parfois tendance à les ingérer. Aussi depuis quelques années afin d'assurer une plus grande sécurité à l'utilisateur et à la population dans son ensemble cherche-t-on à utiliser des poudres détergentes présentant une alcalinité bien inférieure.

Les silicates et particulièrement le métasilicate doit en plus de cette exigence de sécurité répondre à d'autres impératifs qui sont souvent loin d'être réalisables de manière évidente. Ainsi le silicate constituant essentiel de la poudre détergente pour lave vaisselle doit avoir une présentation impeccable car l'aspect dans le domaine de la détergence a souvent des conséquences commerciales considérables. Les grains des silicates doivent présenter : une bonne blancheur, une forme sphérique et une répartition granulométrique régulière afin de ne pas provoquer de phénomènes de sédimentation au sein du baril de poudre.

En dehors de ces caractéristiques d'aspect, les compositions détergentes pour lave vaisselle doivent se présenter sous forme concentrée et doivent donc être constituées de matières premières présentant un poids spécifique élevé car généralement les magasins de distribution intégrés dans les lave vaisselles sont de dimension réduite.

Les matières premières doivent en plus de leur aspect concentré présenter une bonne stabilité au stockage. Les compositions détergentes sont parfois conservées pendant des durées relativement longues, dans des conditions hygrométriques et thermiques souvent très variables. Il faut donc qu'après ces périodes de stockage la composition détergente se présente toujours sous la forme d'une poudre fluide de préférence exempte d'agglomérats dûs à des phénomènes de mottage. En plus de cette stabilité physique, la poudre détergente doit présenter une stabilité chimique. Ainsi le silicate au cours des variations hygrométriques ne doit pas dégrader les constituants plus fragiles tels que les parfums, les sels chlorés, les tensio actifs non ioniques tels que les polyoxyéthylèneglycols.

L'ensemble de ces contraintes qui ne sont pas toujours concordantes fait que le silicate idéal est un produit sophistiqué dont l'obtention pose des problèmes de recherche de plus en plus compliqués. Les normes de sécurité de plus en plus drastiques font qu'aujourd'hui on essaiera de privilégier l'aspect diminution de l'alcalinite tout en évitant de dégrader les autres aspects : blancheur, granulométrie, forme spérique, densité, compatibilité.

Les silicates utilisés dans les compositions détergentes pour lave vaisselle jusqu'à maintenant sont presque exclusivement des métasilicates, c'est à dire des silicates dans lequel le rapport molaire $SiO_2/Na_2O$ est égal a 1. Ce silicate présente la meilleure efficacité car il présente la plus grande alcalinité. Ce métasilicante d'un point de vue de chimique peut se présenter sous forme anhydre dont la densité apparente est très élevée, sous forme pentahydratée dont la densité apparente est plus faible, ils présentent néanmoins tous les deux une agressivité. Il a aussi été proposé dans le brevet européen EP-B 100 700 un granulé de métasilicate présentant un coeur anhydre et une périphérie hydratée mais ce granulé, comme les précédents, ne présente pas les caractéristiques d'innocuité exigées actuellement par le marché.

Il est aussi connu d'après le brevet US-A 3 687 640 de préparer un silicate beaucoup moins alcalin donc beaucoup moins agressif car il présente une composition chimique dans laquelle le rapport molaire $SiO_2/Na_2O$ est voisin de 2. Ce composé présente un aspect non sphérique et une densité d'environ 0.8 ce qui ne le rend pas assez concentré pour une utilisation détergente. D'autre part il présente toujours une alcalinité superficielle élevée, bien que bien inférieure à celle du métasilicate. Son procédé de préparation est en outre difficile à mettre en œuvre.

Il est encore connu d'après le brevet FR 2 380 986 de stabiliser les métasilicates par addition d'une très petite quantité de silice contenant de l'eau. Il est décrit dans l'exemple 10 l'utilisation de 3% d'une silice hydratée contenant 40% de silice et 60% d'eau. Cette silice évite le poussiérage mais ne peut en aucun cas diminuer l'activité de surface du granulé de métasilicate.

La présente invention a permis d'atteindre un but depuis longtemps poursuivi, c'est à dire un silicate présentant une alcalinité de surface réduite, un aspect sphérique, une blancheur et une densité suffisante pour être utilisé dans les compositions détergentes pour lave vaisselle.

La présente invention concerne donc un granulé constitué de silicate et de silice présentant un rapport molaire moyen $SiO_2/Na_2O$ compris entre 1,2, et 2,6 caractérisé en ce qu'il est constitué d'un cœur de métasilicate et d'une périphérie constituée de silice en partie transformée en silicate de rapport $SiO_2/Na_2O$ supérieur à 2.

Le présent silicate présente de préférence un rapport molaire moyen $SiO_2/Na_2O$ compris entre 1,2, et 2,2.

2

Il présente une masse volumique comprise de préférence entre 0,85 et 1,2 ce qui est supérieur aux granulés de silicate de rapport $SiO_2/Na_2O$ égal à 2 de l'art antérieur (brevet US-A 3 687 640).

La teneur en eau calculée en poids par rapport au silicate desdits granulés est comprise de préférence entre 20 et 40%.

Pour une meilleure utilisation dans les compositions détergentes, on préfère avoir une granulométrie des présents silicates comprise entre 0,3 mm et 1,8 mm. Le diamètre moyen des granulés selon l'invention est d'environ 0,8 mm, bien que cette valeur ne soit pas essentielle, elle est simplement préférée car les autres constituants de la composition détergente présentent déjà cette granulométrie.

Les granulés de la présente invention présentent les propriétés suivantes:
– alcalinité de surface fortement réduite
– densité élevée en moyenne d'environ 1
– très bonne stabilité autant en atmosphère chaude qu'en atmosphère humide
– très bonne compatibilité avec les sels chlorés, les tensio actifs, les parfums et les produits naturels sensibles aux PH très alcalins (enzymes).
– bonne résistance à l'attrition.

La structure de ces produits est obtenue notamment à partir du mode de préparation et à partir de matières premières suivantes.

Comme matières premières on utilise les granulés de métasilicate pentahydraté, éventuellement en mélange avec du métasilicate anhydre, et de la silice.

Le métasilicate pentahydraté peut être d'origine très diverses, on préfère cependant utiliser un métasilicate pentahydraté granulaire présentant une dimension de grains comprise entre 0,2 et 1,6 mm.

On utilise tout particulièrement le métasilicate pentahydraté vendu par Rhône-Poulenc sous la marque SIMET 5G®.

Le métasilicate anhydre éventuellement utilisé est un composé pulvérulent dont la granulométrie est inférieure à 0,6 mm. On utilise tout particulièrement le métasilicate anhydre vendu par Rhône-Poulenc sous la marque SIMET AP®.

La silice utilisée est une silice précipitée pulvérulente dont la granulométrie est inférieure à 0,075 mm. On utilise tout particulièrement la silice précipitée vendue par Rhône-Poulenc sous la marque TIX-O-SIL 38A®.

Le procédé de préparation des granulés de silicate présentant un rapport molaire $SiO_2/Na_2O$ compris entre 1,2 et 2,6 est caractérisé en ce qu'on effectue au cours d'une première étape une granulation thermique par mise en contact de granulés de métasilicate pentahydraté, éventuellement en mélange avec du métasilicate anhydre, avec de la silice à une température comprise entre 60 et 75°C et en ce que au cours d'une deuxième étape on refroidit et on effectue une maturation de façon à laisser subsister dans le granulé une quantité d'eau comprise entre 20 et 40% en poids et de façon à provoquer en surface l'adhésion de la silice et en partie sa transformation en silicate de rapport molaire $SiO_2/Na_2O$ supérieur à 2.

La première étape dudit procédé est effectuée par mise en contact des matières premières précédemment définies dans un matériel classique de mélange de poudres tel que tambour tournant, assiette à granuler, lit fluide ou des mélangeurs de poudre du type Lödige, Vidax, Spangenberg. On préfère cependant utiliser un tambour tournant.

On introduit dans le mélangeur les quantités de poudre qui seront définies par l'homme de l'art selon le rapport molaire désiré du silicate à obtenir. Le mélangeur de poudre est ensuite chauffé par tout moyen mais de préférence par un chauffage à rayonnements notamment par infrarouge ou microondes. Le chauffage à rayonnements est de préférence installé perpendiculairement à la paroi du mélangeur.

On maintient à l'intérieur du réacteur une humidité relative correspondant à celle de la tension de vapeur du métasilicate pentahydraté à son point de fusion, c'est à dire une humidité relative exprimée en pression d'eau supérieure à $2.10^4$ Pascal.

Le chauffage est maintenu de préférence pendant 20 à 60 secondes à partir du moment où la masse de poudre a atteint la température désirée.

La deuxième étape du procédé selon l'invention consiste à assurer une maturation du mélange précédemment obtenu après refroidissement .

Si la maturation est effectuée à une température comprise entre 10 et 30°C en présence d'une humidité relative comprise entre l'humidité correspondant à la tension de vapeur du métasilicate pentahydraté et celle correspondant à la tension de vapeur du métasilicate hexahydraté, on obtient les nouveaux granulés de la présente invention décrits précédemment.

On utilise comme appareil de maturation les mêmes appareils que ceux utilisés pour la granulation et de préférence le lit fluide.

Cette maturation est effectuée de préférence pendant une période de 5 à 15 minutes lorsque l'on utilise comme appareil de maturation un lit fluide et de 5 à 30 minutes lorsque l'on utilise comme appareil de maturation un tambour tournant.

Si la maturation est effectuée à une température supérieure et pendant une période de temps plus longue (par exemple aux environs d'une heure) l'eau du métasilicate pentahydraté a tendance à migrer et à transformer la couche superficielle de silice en silicate de haut rapport.

Les produits obtenus par le présent procédé présentent tous une alcalinité superficielle réduite par rapport aux métasilicates et même par rapport aux silicates présentant le même rapport global mais obtenus par un autre procédé.

Ces silicates présentent une bonne compatibilité avec les sels chlorés ou avec les enzymes, ils sont utilisés au sein des compositions détergentes pour lave vaisselle.

Les caractéristiques physicochimiques des granulés de l'invention sont mesurées par les tests suivants :

1) Masse volumique apparente

Elle est déterminée, d'une manière analogue, selon la norme NF T-73-405 qui permet la détermination de la masse volumique apparente des poudres à laver.

On effectue la mesure du volume d'une masse donnée du produit à tester dans une éprouvette graduée après sa chute libre et sans tasser le produit.

On effectue deux déterminations par produit.

2) Teneur en eau

On détermine la teneur en eau par pesée du produit qui a été calciné à 550°C.

3) Vitesse de dissolution

On effectue la vitesse de dissolution en suivant la conductivité de la solution, lors de la dissolution de 17,5 g de produit dans 500 ml d'eau.

Le temps de dissolution est donné par l'abcisse du début du pallier de conductivité. Le temps s'exprime en secondes.

4) Poussièrage

Les granulés de l'invention sont des billes sphériques (voir photo annexée) ayant un aspect de surface très lisse, les granulés ne poussièrent pas.

5) L'alcalinité superficielle

On introduit dans un cristallisoir une épaisseur d'environ 0,5 mm d'un solution d'indicateur coloré tel que la phénol-phtaleine -(0,05 g de phénolphtaleine + 50 ml éthanol + 50 ml d'eau).

On laisse tomber des grains du produit obtenu. Dans le cas d'un
silicate de rapport $SiO_2/Na_2O$ - 2 du brevet US-A 3 687 640 on observe un rougissement instantané du granulé.

L'alcanité de surface présente donc un pH supérieur à 10.

Dans le cas des granulés décrits dans l'invention de rapport $SiO_2/Na_2O = 2$ on n'observe pas de rougissement instantané.

L'alcalinité de surface présente donc un pH inférieur à 10. L'alcalinité superficielle des granulés décrits est donc plus faible que celle des granulés de l'art antérieur.

6) Comportement en solution :

La mise en solution de ces granulés provoque l'attaque du métasilicate par la silice et on obtient à terme une solution de silicate de rapport $SiO_2/Na_2O$ égal au rapport global du granulé.

On peut suivre cette attaque par :
- pH métrie
- conductimétrie
- turbidimétrie

L'invention va être maintenant plus complètement décrite à l'aide des exemples suivants qui ne doivent en rien être considérés comme limitatifs de l'invention.

EXEMPLE 1.

Dans un matériel de mélange constitué d'un tambour tournant On introduit les matières premières suivantes :
- 1270 g de métasilicate SIMET® 5G
- 144 g de silice TIX-O-SIL® 38 A
Les masses sont calculées de façon à obtenir un granulé de rapport massique $SiO_2/Na_2O$ de = 2,0
Le mélangeur est mis en rotation et est chauffé par de l'air chaud sur la paroi extérieure
L'air à l'intérieur du mélangeur est maintenu à une humidité relative, exprimée en pression d'eau, supérieure à $2.10^4$ Pascal.

Quand la température des produits atteint 68°C, on observe le collage très rapide de la silice sur le métasilicate pentahydraté.

Le chauffage est arrêté et on laisse mûrir le co-granulé obtenu durant 30 mn, dans le mélangeur en rotation, à température ambiante.

On obtient le produit n° 1.

EXEMPLE 2.

On reproduit l'exemple 1 en introduisant
- 1270 g de métasilicante SIMET® 5 G
- 206 g de silice TIX-O-SIL® 38 A

On obtient un granulé de rapport pondéral $SiO_2/Na_2O$ = 1,5

On chauffe le mélangeur par une rampe infrarouge installée à l'intérieur du tambour.

Quand la température des produits atteint 75°C on observe le collage de la silice sur le métasilicate pentahydraté.

On procède ensuite comme à l'exemple 1.

EXEMPLE 3.

On reproduit l'exemple 1, en introduisant dans une assiette à granuler
- 1270 g de métasilicate SIMET® 5 G
- 127 g de silice TIX-O-SIL® 38 A

On obtient un granulé de rapport pondéral $SiO_2/Na_2O$ = 1,31

On chauffe l'assiette à granuler par une rampe infrarouge.

Quand la température des produits atteint 71°C on observe le collage de la silice sur le métasilicate pentahydrateé.

Le mûrissement du granulé dure 15 minutes à température ambiante.

EXEMPLE 4.

On reproduit l'exemple 1 en introduisant
- 1000 g de métasilicate SIMET® 5 G
- 215 g de métasilicate SIMET® AP
- 444 g de silice TIX-O-SIL® 38 A

On obtient un granulé de rapport pondéral $SiO_2/Na_2O$ = 2,0.

Quand la température atteint 82°C on observe le collage de la silice sur le métasilicate.

Le mûrissement est effectué comme dans l'exemple 1.

EXEMPLE 5.

On reproduit l'exemple 1 en introduisant
- 1400 g de métasilicate SIMET® 5 G
- 90,4 g de silice TIX-O-SIL® 38 A

On obtient un granulé de rapport pondéral $SiO_2/Na_2O$ = 1,2

Quand la température des produits atteint 75°C on observe le collage rapide de la silice sur le métasilicate.

Le mûrissement est effectué comme à l'exemple 1.

EXEMPLE 6.

On reproduit l'exemple 1 en introduisant
- 1270 g de métasilicate® 5 G
- 537 g de silice TIX-O-SIL® 38 A

On obtient un granulé de rapport pondéral $SiO_2/Na_2O$ = 2,3

Quand la température des produits atteint 70°C on observe le collage de la silice sur le métasilicate.

Le mûrissement du granulé est effectué comme à l'exemple 1.

EXEMPLE 7.

On reproduit l'exemple 1 en introduisant
- 1270 g de métasilicate SIMET® 5 G
- 444 g de silice TIX-O-SIL® 38 A

On obtient un granulé de rapport pondéral $SiO_2/Na_2O$ = 2,0

Quand la température des produits atteint 72°C on observe le collage de la silice.

Le mûrissement du granulé est effectué pendant 4 heures à 52°C.

EXEMPLE 8.

On reproduit l'exemple 1 en introduisant dans une assiette à granuler
- 1270 g de métasilicate SIMET® 5 G
- 444 g de silice TIX-O-SIL® 38 A
On obtient un granulé de rapport pondéral $SiO_2/Na_2O = 2,0$
On chauffe l'assiette à granuler par une rampe infrarouge
Quand la température des produits atteint 74°C on observe le collage de la silice sur le métasilicate.
Le mûrissement est effectué pendant 2 heures à 50°C.

| Essai | 1 | 2 | 3 | 4 | 5 | 6 | 7 | 8 |
|---|---|---|---|---|---|---|---|---|
| $R_p$ du granulé | 2,0 | 1,5 | 1,31 | 2,0 | 1,2 | 2,3 | 2,0 | 2,0 |
| granulateur | tambour | T | Assiette | T | T | T | T | A |
| température de granulation (0°C) | 68,5 | 75 | 71 | 82 | 75 | 70 | 72 | 74 |
| Mûrissement/séchage | M | M | M | M | M | M | S | S |
| Perte 550°C (%) | 32,1 | 36,9 | 37,9 | 36,2 | 39,3 | 34,7 | 27,2 | 24,2 |
| Vitesse dissolution(s) | 90 | 85 | 85 | 100 | 60 | 120 | 150 | 168 |
| densité | 1,02 | 1,04 | 0,99 | 1,02 | 1,02 | 1,00 | 1,00 | 0,97 |

$R_p$ = rapport pondéral $SiO_2/Na_2O$

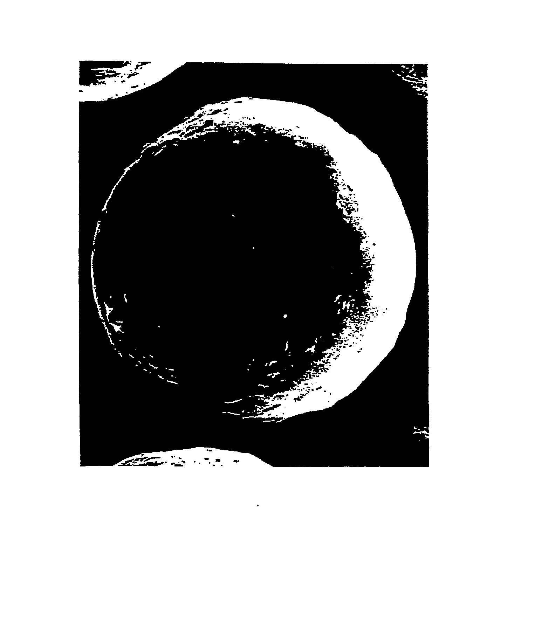

**Revendications**

1. Granulés constitués de silicate et de silice présentant un rapport molaire moyen $SiO_2/Na_2O$ compris entre 1,2 et 2,6 caractérisés en ce qu'ils sont constitués d'un coeur de métasilicate et d'une périphérie de silice, en partie transformée en silicate de rapport $SiO_2/Na_2O$ supérieur à 2.

2. Granulés selon la revendication 1, caractérisé en ce que le rapport molaire moyen $SiO_2/Na_2O$ est compris entre 1,2 et 2,2.

3. Granulés selon la revendication 1, caractérisé en ce qu'ils présentent une masse volumique comprise entre 0,85 et 1,2.

4. Granulés selon la revendication 1, caractérisé en ce qu'ils ont une teneur en eau comprise entre 20 et 40%, calculée en poids par rapport au silicate.

5. Granulés selon la revendication 1, caractérisé en ce qu'ils présentent une granulométrie comprise entre 0,3 mm et 1,8 mm.

6. Procédé pour la préparation de granulés selon la revendication 1, caractérisé en ce qu'on effectue au cours d'une 1ère étape une granulation thermique par mise en contact de granulés de métasilicate pentahydraté, éventuellement en mélange avec du métasilicate anhydre, avec de la silice à une température comprise entre 60 et 75°C, et en ce que dans une 2ème étape on effectue une étape de maturation de façon à laisser subsister dans le granulé une quantité d'eau comprise entre 20 et 40% et à provoquer en surface l'adhésion de la silice et en partie sa transformation en silicate de rapport $SiO_2/Na_2O$ supérieur à 2.

7. Procédé selon la revendication 6, caractérisé en ce que le métasilicate pentahydraté présente une granulométrie moyenne comprise entre 0,2 et 1,6 mm.

8. Procédé selon la revendication 6, caractérisé en ce que le métasilicate anhydre présente une granulométrie moyenne inférieure à 0,6 mm.

9. Procédé selon la revendication 6, caractérisé en ce que la silice est une silice précipitée dont la granulométrie est inférieure à 0,075 mm.

10. Procédé selon la revendication 6, caractérisé en ce que la première étape est réalisée dans un tambour tournant.

11. Procédé selon la revendication 6, caractérisé en ce que dans la première étape le chauffage est effectué à l'aide de rayonnements infrarouges ou à l'aide de microondes.

12. Procédé selon la revendication 6, caractérisé en ce que, au cours de la première étape, on maintient une humidité relative correspondant à celle de la tension de vapeur du métasilicate pentahydraté à son point de fusion.

13. Procédé selon la revendication 6, caractérisé en ce que la maturation est effectuée à une température comprise entre 10 et 30°C.

14. Procédé selon la revendication 6, caractérisé en ce que la maturation est effectuée sous une humidité relative correspondant à une humidité relative comprise entre la tension de vapeur du métasilicate pentahydraté et celle du métasilicate hexahydraté.

EP 0 248 745 B1

15. Utilisation des granulés selon la revendication 1, dans les compositions lessivielles pour lave vaisselle.

**Patentansprüche**

1. Körnchen, bestehend aus Silicat und Siliciumdioxid mit einem mittleren Molverhältnis SiO₂/Na₂O zwischen 1,2 und 2,6, dadurch gekennzeichnet, daß sie aus einem Kern aus Metasilicat und einer Außenschicht aus Siliciumdioxid bestehen, teilweise umgewandelt in ein Silicat mit einem Verhältnis SiO₂/Na₂O über 2.

2. Körnchen nach Anspruch 1, dadurch gekennzeichnet, daß das mittlere Molverhältnis SiO₂/Na₂O zwischen 1,2 und 2,2 liegt.

3. Körnchen nach Anspruch 1, dadurch gekennzeichnet, daß sie eine Volumenmasse zwischen 0,85 und 1,2 aufweisen.

4. Körnchen nach Anspruch 1, dadurch gekennzeichnet, daß sie einen Wassergehalt zwischen 20 und 40%, berechnet als Gewicht und bezogen auf das Silicat, aufweisen.

5. Körnchen nach Anspruch 1, dadurch gekennzeichnet, daß sie eine Korngröße zwischen 0,3 mm und 1,8 mm aufweisen.

6. Verfahren zur Herstellung der Körnchen nach Anspruch 1, dadurch gekennzeichnet, daß man während einer ersten Stufe eine thermische Granulation durchführt durch Zusammenbringen von Körnchen von Metasilicat-pentahydrat, gegebenenfalls im Gemisch mit wasserfreiem Metasilicat, mit dem Siliciumdioxid bei einer Temperatur zwischen 60 und 75°C, und daß man in einer zweiten Stufe eine Reifungsstufe durchführt derart, daß in dem Granulat eine Menge Wasser zwischen 20 und 40% verbleibt und auf der Oberfläche eine Haftung des Siliciumdioxids und dessen teilweise Umwandlung in ein Silicat mit einem Verhältnis SiO₂/Na₂O > 2 hervorgerufen wird.

7. Verfahren nach Anspruch 6, dadurch gekennzeichnet, daß das vorhandene Metasilicat-pentahydrat eine mittlere Korngröße zwischen 0,2 und 1,6 mm besitzt.

8. Verfahren nach Anspruch 6, dadurch gekennzeichnet, daß das vorhandene wasserfreie Metasilicat eine mittlere Korngröße < 0,6 mm aufweist.

9. Verfahren nach Anspruch 6, dadurch gekennzeichnet, daß das Siliciumdioxid eine ausgefällte Kieselsäure ist, deren Korngröße < 0,075 mm ist.

10. Verfahren nach Anspruch 6, dadurch gekennzeichnet, daß die erste Stufe in einer sich drehenden Trommel durchgeführt wird.

11. Verfahren nach Anspruch 6, dadurch gekennzeichnet, daß in der ersten Stufe das Heizen mit Hilfe von Infrarotstrahlen oder mit Hilfe von Mikrowellen durchgeführt wird.

12. Verfahren nach Anspruch 6, dadurch gekennzeichnet, daß man im Verlauf der ersten Stufe eine relative Feuchtigkeit aufrechterhält, entsprechend dem Dampfdruck des Metasilicat-pentahydrats bei seinem Schmelzpunkt.

13. Verfahren nach Anspruch 6, dadurch gekennzeichnet, daß die Reifung bei einer Temperatur zwischen 10 und 30°C durchgeführt wird.

14. Verfahren nach Anspruch 6, dadurch gekennzeichnet, daß die Reifung bei einer relativen Feuchtigkeit durchgeführt wird, entsprechend einer relativen Feuchtigkeit zwischen dem Dampfdruck des Metasilicat-pentahydrats und demjenigen des Metasilicat-hexahydrats.

15. Verwendung der Körnchen nach Anspruch 1 in Waschmitteln für Geschirrspülmaschinen.

**Claims**

1. Granules consisting of silicate and silica having an average SiO₂/Na₂O molar ratio of between 1.2 and 2.6, characterized in that they consist of a metasilicate core and a silica periphery in part converted into silicate in an SiO₂/Na₂O ratio higher than 2.

2. Granules according to claim 1, characterized in that the average SiO₂/Na₂O molar ratio is between 1.2 and 2.2.

3. Granules according to claim 1, characterized in that they have a density of between 0.85 and 1.2.

4. Granules according to claim 1, characterized in that they have a water content of between 20 and 40%, calculated by weight relative to the silicate.

5. Granules according to claim 1, characterized in that they have a particle size of between 0.3 mm and 1.8 mm.

6. Process for the preparation of granules according to claim 1, characterized in that during a 1st stage, a thermal granulation is carried out by bringing the granules of metasilicate pentahydrate, optionally mixed with anhydrous metasilicate, into contact with silica at a temperature of between 60 and 75°C sic and in that in a 2nd stage, a maturing stage is carried out so as to allow a quantity of water of between 20 and 40% to remain in the granule and to cause the adhesion of silica to the surface and a partial conversion thereof into silicate with a SiO₂/Na₂O ratio greater than 2.

7. Process according to claim 6, characterized in that the metasilicate pentahydrate has an average particle size of between 0.2 and 1.6 mm.

7

8. Process according to claim 6, characterized in that the anhydrous metasilicate has an average particle size of less than 0.6 mm.

9. Process according to claim 6, characterized in that the silica is a precipitated silica, the particle size of which is less than 0.075 mm.

10. Process according to claim 6, characterized in that the first stage is carried out in a rotary drum.

11. Process according to claim 6, characterized in that in the first stage the heating is carried out using infrared radiation or using microwaves.

12. Process according to claim 6, characterized in that, during the first stage, a relative humidity corresponding to that of the vapour pressure of the metasilicate pentahydrate at its melting point is maintained.

13. Process according to claim 6, characterized in that the maturing is carried out at a temperature of between 10 and 30°C.

14. Process according to claim 6, characterized in that the maturing is carried out at a relative humidity corresponding to a relative humidity between the vapour pressure of the metasilicate pentahydrate and that of the metasilicate hexahydrate.

15. Use of the granules according to claim 1, in detergent compositions for dishwashers.